# EUROPEAN PATENT SPECIFICATION

(11) **EP 0 987 172 B1**
(45) Date of publication and mention of the grant of the patent: **14.07.2004**
(21) Application number: 99500150.0
(22) Date of filing: 18.08.1999
(51) Int. Cl.: B62J 9/00, B65D 43/22, A45C 13/10

(54) **Top-box for motorcycles**
Aufsatzbehälter für Motorräder
Coffre de porte-bagages pour motocyclettes

(30) Priority: 16.09.1998 ES 9801983
(43) Date of publication of application: 22.03.2000
(73) Proprietor: NAD, S.A., 08100 Mollet del Valles (ES)
(72) Inventor: Lucia Monforte, Pedro, 08100 Mollet del Vallès (ES)
(74) Representative: Ponti Sales, Adelaida

(56) References cited:
- EP-A- 0 709 282
- EP-A- 0 709 283
- DE-A- 2 219 522
- GB-A- 190 810 555

## Description

The present invention relates to a top-box for motorcycle according to claim 1, of the type that comprises a lower half-shell and an upper half-shell which together form an interior chamber. The lower half-shell is usually fixed to the structure of the motorcycle frame, and particularly to the subframe, by means of a base support.

### BACKGROUND OF THE INVENTION

EP-A-0 709 283 shows a top-box for motorcycles according to the preamble of claim 1.

The use of top-boxes on motorcycles makes it essential to fit means of securing or locking the box to prevent it being opened in order to gain access to the objects stowed inside it. In this regard, the applicant for the present application is also proprietor of Spanish utility models 9402766 and 9402767. The first utility model mentioned relates to a locking mechanism. Said locking mechanism includes an opening lever that is hinged onto the half-shell fitted with the lock which blocks the movement of the lever. The second utility model mentioned describes a mechanism for securing and locking motorcycle top-boxes. This mechanism basically includes a piece that hooks the upper half-shell which is mounted attached to the lower half-shell by means of a piece acting as a connecting rod. Said lower half-shell is also fitted with fold-down handle hinged onto it to make it easier to carry the top-box. There is also a lock mounted on a locking lever hinged onto the lower half-shell.

### DESCRIPTION

One objective of the present invention is to provide a secure and reliable top-box for motorcycles capable of effectively guaranteeing its inviolability, thereby offering an effective means of carrying objects, while at the same time being simple from a functional and constructional point of view.

The aforesaid objectives are achieved with the top-box of the invention, which will be described below. Furthermore, said top-box presents other advantages which will become clear from the description which follows.

Along general lines, the motorcycle top-box of the invention essentially comprises a lower half-shell and an upper half-shell that together form an interior chamber. The upper half-shell can tilt with respect to the lower half-shell. Said half-shells have locking means to prevent opening of the upper half-shell with respect to the lower half-shell. Said locking means include an inserting element attached to the lower half-shell and a receiving element attached to the upper half-shell.

The special feature of the motorcycle top-box of the invention lies in the fact that the inserting element is hinged on the lower half-shell. The hinging of the inserting element is implemented in such a way that the element can move in a direction substantially perpendicular to the face of the lower half-shell to which said element is attached. The inserting element includes elastic means for insertion under pressure into the receiving element. Similarly, the lower half-shell is provided with means for driving the inserting element in order to release the two half-shells from each other.

The combined arrangement of the hinged attachment of the inserting element on the lower half-shell and the driving means of the inserting element considerably facilitate opening of the box by the user. Furthermore, the described arrangement of the locking means achieves effective locking of the box since it is considerably more difficult to violate than are the known top-boxes.

In accordance with one aspect of the invention, the driving means include a lever hinged onto the lower half-shell and connected operatively with a rod that acts on the inserting element. The driving means are thus simplified considerably, while an effective way of opening the box is provided since the locking or securing of the half-shells is carried out more securely, as mentioned above.

In accordance with another aspect of the invention, the locking means include a pair of inserting elements and a pair of receiving elements so that the securing operation is carried out by acting on two points of the top-box to ensure firm securing.

Preferably, the inserting element is a plate hinged onto the lower half-shell and provided with a projection on its top part. The receiving element includes a plate provided with an orifice in which the aforesaid projection is inserted. The aforesaid projection of the inserting element advantageously includes a protuberance that forms an inclined plane providing a slope designed to facilitate insertion of the inserting element. It is thus sufficient to apply only slight pressure on the upper half-shell so that the plate of said half-shell slides suitably on the surface of the aforesaid slope, forcing the plate of the lower half-shell to detach slightly from it and allowing its projection to be inserted into the orifice of the receiving element.

The invention also provides for incorporation into the lower half-shell of a power socket supplied from the motorcycle so as to be able to plug into the top-box items that work with electricity, such as light fitments. In this respect, the upper part of the exterior of the upper half-shell is designed for installing lighting means powered from the power socket of the lower half-shell.

The aforesaid socket can include an electrical contact element consisting, for example, of a threaded terminal on the lower half-shell provided with a rounded head designed to make contact with a contacting element consisting of flats fitted on the base plate of the top-box.

As described earlier, the top-box is fixed onto the motorcycle, and more specifically onto its subframe, by attaching the lower half-shell onto the aforesaid base plate. Thus, when the top-box, that is, the lower half-shell, is attached onto the base plate, the upper end of the contacting flats, which are to a certain extent flexible, move to one side as they slide on the surface of the terminal. The contact between the terminal and the flats permits the passage of electrical current from the motorcycle to a cable connected to said terminal. This cable allows power to be supplied to the aforesaid lighting means situated on the top part of the outside of the upper half-shell.

### BRIEF DESCRIPTION OF THE DRAWINGS

Other characteristics and advantages of the top-box of the invention for motorcycles will become clear from the following description relating to a practical embodiment of the invention that is not exclusive in its nature, but is provided solely by way of non-restrictive example. The description in question relates to the drawings attached, the objective of which is to clarify the description of the matters set out above in this specification. Other embodiments of the top-box of the invention will be obvious to an expert on the subject, all of which embodiments are included within the scope of this invention as defined in the appended claims.

In said drawings:
Figure 1 is a partially sectioned perspective view of a top-box pursuant to this invention;
Figure 2 is a partial perspective view of the top-box of the invention, which is shown with the half-shells secured in locked position;
Figure 3 is a partial perspective view of the top-box of the invention, which is shown in opened position, that is, with the upper half-shell released from the lower half-shell; and
Figure 4 is a partial view in side section of the lower half-shell of the top-box and the base plate on which it is attached, shown detached from each other.

### DESCRIPTION OF A PREFERRED EMBODIMENT

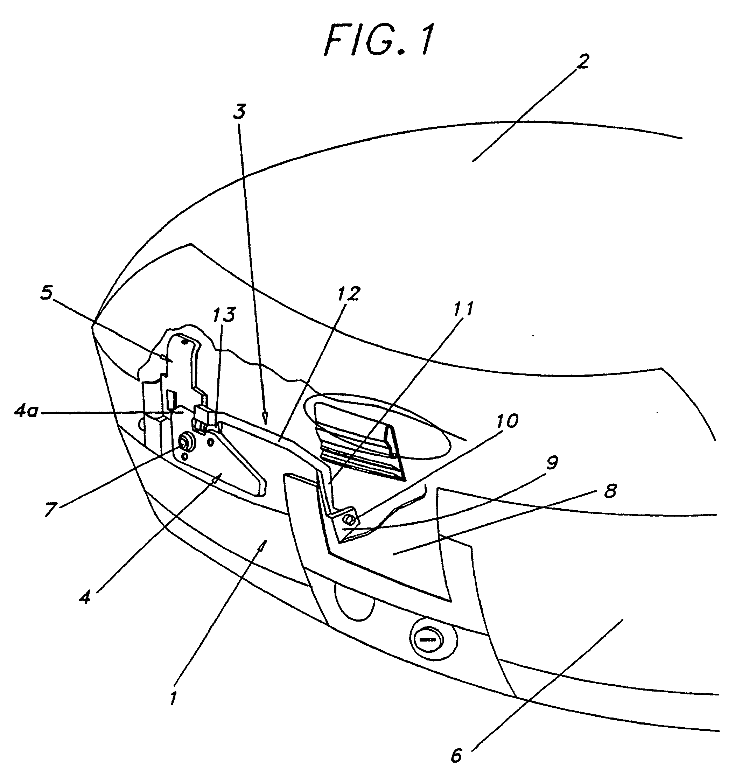

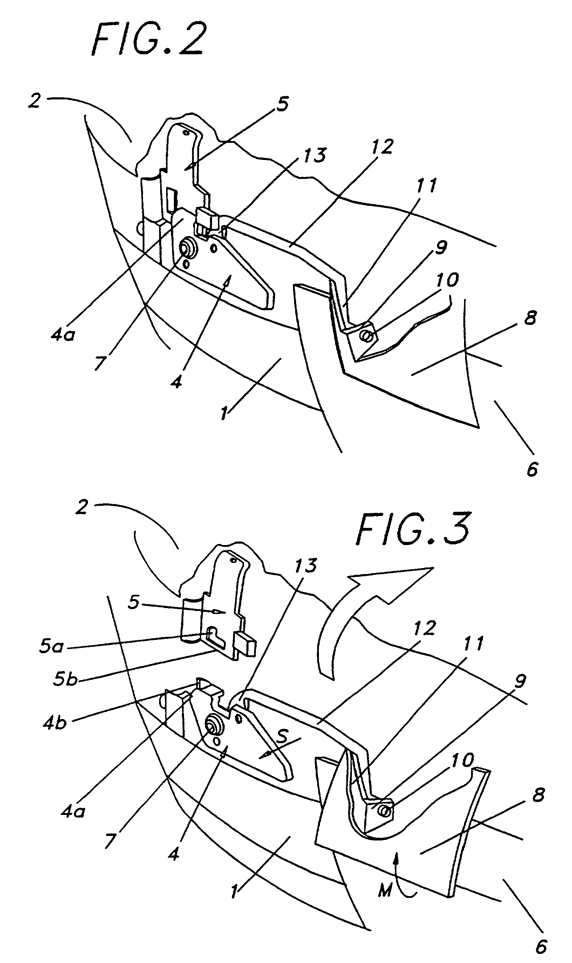

Making reference to Figures 1 and 2, a top-box for motorcycles in accordance with this invention includes a lower half-shell 1 and an upper half-shell 2. The lower half-shell 1 is usually attached to a base plate (not shown in the figures) which is in turn fixed to the subframe of the motorcycle. In locked position the half-shells 1,2 form a chamber inside which objects may be stowed. The upper half-shell 2 can tilt in relation to the lower half-shell in order to be able to gain access to the objects stowed inside the top-box.

The half-shells 1,2 incorporate locking means 3 whose mission is to prevent the top-box being opened, that is, to prevent the upper half-shell 2 being released from the lower half-shell 1 when they are in the locked position.

The locking means 3 include an inserting element 4 attached to the lower half-shell 1 and a receiving element 5 attached to the upper half-shell. As can be appreciated, the inserting element 4 is a plate hinged onto the lower half-shell 1 provided with a projection 4a on its upper part. Furthermore, the receiving element 5 includes a plate provided with an orifice 5a (see Figure 3) into which the projection 4a of the inserting element 4 is inserted. Said projection 4a extends in a protuberance 4b (again, see Figure 3) which forms an inclined plane providing a slope designed to facilitate insertion of the projection 4a into the orifice 5a, as will be described in detail below.

Also making reference to Figure 3, the aforesaid inserting element 4 is hinged onto the lower half-shell 1 in such a way that it can move in the direction marked "S" in the figures, which is substantially perpendicular to the face of the lower half-shell 1.

The inserting element 4 incorporates elastic means 7 that tend to keep the element 4 in the position shown in Figures 1 and 2, that is, against the receiving element 5.

The lower half-shell is provided with means for moving the inserting element 4 to release the two half-shells 1,2 from each other. Said moving means include a lever 8 hinged onto the lower half-shell 1. This lever 8 has interior projections 9 provided with orifices 10 into which one end 11 of the metal rod 12, essentially having the form of an inverted "U", is inserted. The opposite end 13 of the rod 12 is left in contact with the inserting element 4.

The operation of the locking means is now explained with reference to Figures 2 and 3.

In the locked position shown in Figure 2, the lever 8 remains in substantially vertical position thanks to the action of a spring mounted on the interior part of the face 6, which keeps the lever 8 in the above-mentioned position (for reasons of clarity this spring is not shown in the figures). In this position, the projection 4a of the inserting element 4 is inserted into the orifice 5a of the receiving element 5 of the upper half-shell 2, as can be clearly appreciated from Figure 2.

Making reference to Figure 3, in order to open the top-box the user must push the lever 8 upwards as shown by the arrow M, overcoming the force of the spring mentioned above. When said lever 8 is tilted, the interior projection 9 causes rotation of the end 11 of the rod 12. The other end 13 also rotates and causes the inserting element 4 to tilt forwards in the direction shown by the arrow S (Figure 3), overcoming the force of the elastic means 7 that oppose said tilting. The movement of the inserting element 4 caused by the movement of the lever 8 results in the projection 4a of the inserting element coming out of the orifice 5a of the receiving element 5 and, as a consequence, means that the upper half-shell 2 can be released from the lower half-shell 1, as shown in Figure 3.

In order to close the top-box, starting from the position shown in Figure 3 the user must push the upper half-shell 2, making it tilt towards the lower half-shell 1. This causes the receiving element 5 to move towards the inserting element 4 until the slope of protuberance 4b from the inserting element 4 slides by contact on the lower surface 5b of the receiving element 5. The sliding of the protuberance 4b results in the inserting element 4 tilting forward in the direction of the arrow S and overcoming the force of the elastic means 7. This continues until the projection 4a is inserted into the orifice 5a of the receiving element, at which moment the inserting element returns to its initial position, that is, that determined by the aforesaid elastic means 7. At this point the top-box will be locked, with the half-shells 1,2 secured to each other.

The description and the figures refer to locking means which include an inserting element 4 and a receiving element 5. It will nevertheless be understood that said locking means 3 can include a pair of inserting elements and a pair of receiving elements, arranged on either side of the lever 8.

On a top-box designed in accordance with the description, the means for moving said pair of inserting elements comprise a lever 8 hinged onto the lower half-shell 1. This lever 8 has interior projections 9 provided with orifices 10 into which are inserted the ends 11 of the metal rods, while the opposite ends of said two rods are left in contact with each respective inserting element 4.

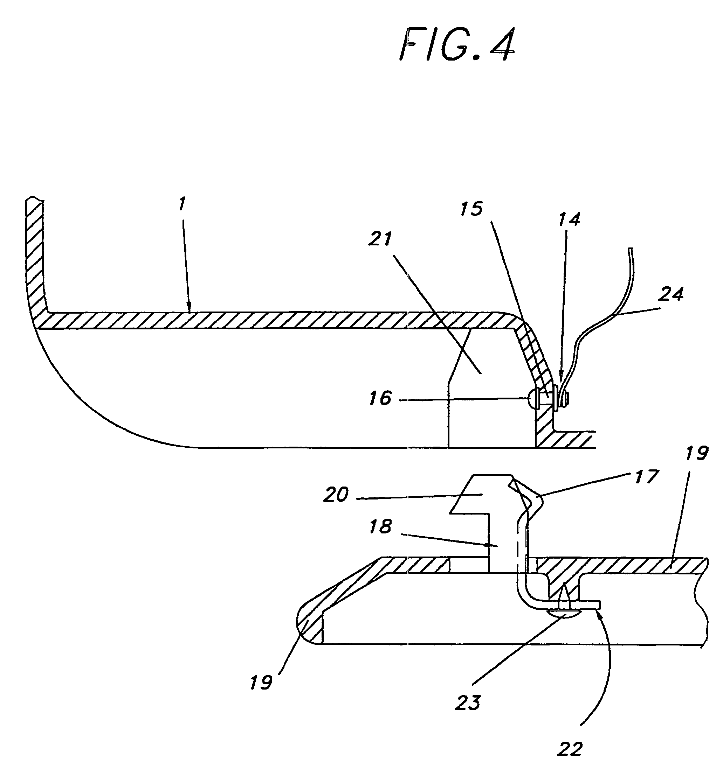

The top-box of this invention makes allowance for the lower half-shell 1 incorporating a power socket 14 in its lower part, as shown in Figure 4. Said socket 14 includes an electrical contact element 15 that consists of a threaded terminal on the lower half-shell 1. Said terminal has a rounded head 16 designed to make contact with a contact element. Said contact element includes two flats 17 arranged parallel to each other and resting on a coupling element 18 of the base plate 19 of the top-box. The coupling element 18 extends vertically and forms at its upper end a horizontal projection 20 designed to fit into an orifice 21 of the lower half-shell 1. The end 22 of the contact element 17 is fixed onto the base plate 19 by means of a fixing element 23 and is connected to the power supply means of the motorcycle.

The top-box is fixed onto the motorcycle, and more specifically onto the subframe, by attaching the lower half-shell 1 against the aforesaid base plate 19. As described, when the top-box is attached, that is, when the lower half-shell 1 is attached, onto the base plate 19, the attaching element 18 is inserted into the orifice 21 of said half-shell 1. When this happens the upper end of the contact element 17, which is flexible to a certain extent, moves to the left as shown in Figure 4, when it slides on the surface of the head 16 of the electrical contact 15. The contact that exists between said element 17 and said electrical contact 15 allows electrical current to flow from the power supply means of the motorcycle to the cable 24, which is connected to the aforesaid contact 15. This cable 24 allows power supply to lighting means (not shown) situated on the upper part of the outside of the upper half-shell 2.

Independent of the object of this invention shall be all materials used in manufacturing of the elements making up the top-box for motorcycles described in this specification. Similarly, the shapes and dimensions of the box, and the technical characteristics of the locking means, the means for moving the inserting element and the means of lighting described may be as required for each specific utilisation. Moreover, all the accessory details that might be presented and the aforesaid technical characteristics may be replaced by other characteristics that are technically equivalent, as long as they do not affect its essential nature or depart from the scope defined by the appended claims.

## Claims

1. Top-box for motorcycles that includes a lower half-shell (1) and an upper half-shell (2) that together form an interior chamber, the upper half-shell (2) being tiltable in relation to the lower half-shell (1) and said half-shells (1,2) having locking means (3) to prevent opening of the upper half-shell (2) with respect to the lower half-shell (1), said means including an inserting element (4) attached to the lower half-shell (1) and a receiving element (5) attached to the upper half-shell (2), ***characterised in that*** the inserting element (4) is hinged to the lower half-shell (1) in such a way that it can move in a direction (S) substantially perpendicular to the face (6) of the lower half-shell (1) to which said inserting element (4) is attached, said inserting element (4) having elastic means (7) for its insertion under pressure into the receiving element (5), the lower half-shell (1) being further provided with means (8, 12) for driving the inserting element (4) in order to release the two half-shells (1,2) from each other.

2. Top-box as claimed in Claim 1, **characterised in that** the driving means (8,12) include a lever (8) hinged to the lower half-shell (1) and operatively connected with a rod (12) that acts on the inserting element (4).

3. Top-box as claimed in either of Claims 1 or 2, **characterised in that** the locking means (3) include a pair of inserting elements (4) and a pair of receiving elements.

4. Top-box as claimed in any of the previous claims, **characterised in that** the inserting element (4) is a plate hinged to the lower half-shell and provided with a projection (4a) on its top part, and **in that** the receiving element (5) includes a plate provided with an orifice (5a) in which the aforesaid projection (4a) is inserted, said projection (4a) of the inserting element (4) including a protuberance (4b) that forms an inclined plane providing a slope designed to facilitate insertion of the inserting element (4).

5. Top-box as claimed in Claim 1, **characterised in that** the lower half-shell has a power socket supplied from the motorcycle.

6. Top-box as claimed in Claim 5, **characterised in that** the upper part of the exterior of the upper half-shell is adapted for installing lighting means powered from the power socket of the lower half-shell.

## Patentansprüche

1. Topcase für Motorräder, das eine untere Halbschale (1) und eine obere Halbschale (2) aufweist, die gemeinsam eine innere Kammer bilden, wobei die obere Halbschale (2) relativ zur unteren Halbschale (1) kippbar ist und die Halbschalen (1, 2) Verschlußmittel (3) aufweisen, um ein Öffnen der oberen Halbschale (2) bezüglich der unteren Halbschale (1) zu verhindern, wobei die Mittel ein Einfügeelement (4) aufweisen, das an der unteren Halbschale (1) befestigt ist, und ein Aufnahmeelement (5), das an der oberen Halbschale (2) befestigt ist,
**dadurch gekennzeichnet, daß**
das Einfügeelement (4) gelenkig derart mit der unteren Halbschale (1) verbunden ist, daß es sich in einer Richtung (S) bewegen kann, die im wesentlichen senkrecht zu der Fläche (6) der unteren Halbschale (1) ist, an der das Einfügeelement (4) befestigt ist, wobei das Einfügeelement (4) elastische Mittel (7) für dessen Einfügen unter Druck in das Aufnahmeelement (5) aufweist, wobei die untere Halbschale (1) weiterhin ausgestattet ist mit Mitteln (8, 12) zum Antreiben des Einfügeelements (4), um die beiden Halbschalen (1, 2) voneinander zu lösen.

2. Topcase nach Anspruch 1, **dadurch gekennzeichnet, daß** die Antriebsmittel (8, 12) einen Hebel (8) aufweisen, der gelenkig mit der unteren Halbschale (1) verbunden ist und wirkend mit einer Stange (12) verbunden ist, die auf das Einfügeelement (4) wirkt.

3. Topcase nach Anspruch 1 oder 2, **dadurch gekennzeichnet, daß** die Verschlußmittel (3) ein Paar von Einfügeelementen (4) und ein Paar von Aufnahmeelementen (5) aufweisen.

4. Topcase nach einem der vorangehenden Ansprüche, **dadurch gekennzeichnet, daß** das Einfügeelement (4) eine Platte ist, die schwenkbar an der unteren Halbschale (1) befestigt ist und mit einer Auskragung (4a) an ihrem oberen Abschnitt ausgestattet ist, und daß das Aufnahmeelement (5) eine Platte aufweist, die mit einer Öffnung (5a) ausgestattet ist, in welche die Auskragung (4a) eingeführt wird, wobei die Auskragung (4a) des Einfügeelements (4) einen Vorsprung (4b) aufweist, der eine schräge Ebene bildet, welche eine Neigung liefert, die ausgestaltet ist, um das Einfügen des Einfügeelements (4) zu erleichtern.

5. Topcase nach Anspruch 1, **dadurch gekennzeichnet, daß** die untere Halbschale (1) eine Strombuchse aufweist, die vom Motorrad versorgt wird.

6. Topcase nach Anspruch 5, **dadurch gekennzeichnet, daß** der untere Teil des Äußeren der oberen Halbschale (2) zum Installieren von Leuchtmitteln geeignet ist, die von der Strombuchse der unteren Halbschale (1) versorgt werden.

## Revendications

1. Top-case pour motocyclettes qui comprend une demi-coque inférieure (1) et une demi-coque supérieure (2) qui forment ensemble une chambre intérieure, la demi-coque supérieure (2) pouvant être pivotée par rapport à la demi-coque inférieure (1) et lesdites demi-coques (1,2) comportant un moyen de verrouillage (3) pour empêcher l'ouverture de la demi-coque supérieure (2) par rapport à la demi-coque inférieure (1), ledit moyen comprenant un élément d'insertion (4) fixé à la demi-coque inférieure (1) et un élément de réception (5) fixé à la demi-coque supérieure (2), **caractérisé en ce que** l'élément d'insertion (4) est articulé par rapport à la demi-coque inférieure (1) de telle sorte qu'elle puisse se déplacer dans une direction (S) approximativement perpendiculaire à la face (6) de la demi-coque inférieure (1) à laquelle ledit élément d'insertion (4) est fixé, ledit élément d'insertion (4) comportant un moyen élastique (7) pour son insertion sous pression dans l'élément de réception (5), la demi-coque inférieure (1) étant en outre munie de moyens (8, 12) pour entraîner l'élément d'insertion (4) afin de séparer les deux demi-coques (1,2) l'une de l'autre.

2. Top-case selon la revendication 1, **caractérisé en ce que** les moyens d'entraînement (8,12) comprennent un levier (8) articulé par rapport à la demi-coque inférieure (1) et relié de manière fonctionnelle à une tige (12) qui agit sur l'élément d'insertion (4).

3. Top-case selon l'une des revendications 1 ou 2, **caractérisé en ce que** le moyen de verrouillage (3) comprend une paire d'éléments d'insertion (4) et une paire d'éléments de réception.

4. Top-case selon l'une des revendications précédentes, **caractérisé en ce que** l'élément d'insertion (4) est une plaque articulée par rapport à la demi-coque inférieure et est muni d'une saillie (4a) sur sa partie supérieure, et **en ce que** l'élément de réception (5) comprend une plaque avec un orifice (5a) dans lequel la saillie (4a) mentionnée ci-dessus est insérée, ladite saillie (4a) de l'élément d'insertion (4) comprenant une protubérance (4b) qui forme un plan incliné avec une pente destinée à faciliter l'insertion de l'élément d'insertion (4).

5. Top-case selon la revendication 1, **caractérisé en ce que** la demi-coque inférieure comporte un connecteur électrique alimenté à partir de la motocyclette.

6. Top-case selon la revendication 5, **caractérisé en ce que** la partie supérieure de l'extérieur de la demi-coque supérieure est conçue pour l'installation de moyens d'éclairage alimentés à partir du connecteur électrique de la demi-coque inférieure.
